(19) Europäisches Patentamt
European Patent Office
Office européen des brevets

(11) Numéro de publication: **0 209 422**
**A1**

(12) **DEMANDE DE BREVET EUROPEEN**

(21) Numéro de dépôt: **86401274.5**

(22) Date de dépôt: **11.06.86**

(51) Int. Cl.⁴: **G 06 K 11/00**, G 05 B 19/42, H 04 N 1/04

(30) Priorité: **13.06.85 FR 8508975**

(43) Date de publication de la demande: **21.01.87 Bulletin 87/4**

(84) Etats contractants désignés: **AT BE CH DE GB IT LI LU NL SE**

(71) Demandeur: **CENTAURE ROBOTIQUE Sarl, 42-44 Rue des Meuniers, F-93100 Montreuil (FR)**

(72) Inventeur: **Billiote, Jean-Marie, 8 place des Fédérés, F-93160 Noisy Le Grand (FR)**
Inventeur: **Primat, Didier, 15 chemin de Bois Caran, Collonge Bellerive 1245 Geneve (CH)**
Inventeur: **Bouin, Thierry, Résidence le Nerprun, F-28500 Boutigny (FR)**
Inventeur: **Basset, Frédéric, 33 rue Frémicourt, F-75015 Paris (FR)**
Inventeur: **Beauvois, Jacques, 3 Pl. des Vosges, F-75004 Paris (FR)**

(74) Mandataire: **Pinguet, André, CAPRI 28 bis, avenue Mozart, F-75016 Paris (FR)**

(54) **Amélioration aux procédés et dispositifs de digitalisation automatique d'une scène comportant des éléments significatifs discrets.**

(57) Le procédé de l'invention concerne la digitalisation avec une précision (p) de zones sensibles isolées (16) centrées sur des points discrets (C'16) d'une scène (3) en vue de déterminer avec une précision (p) la position des points discrets (C'16).

Pour ce faire, on digitalise avec une précision (q > p) l'ensemble de la scène (3). On détermine automatiquement avec la précision (q) une position approximative (C16) de chacun des points discrets.

Puis on procède successivement à la digitalisation avec une précision (p) d'une pluralité de portions (F'16) de la scène (3) centrées sur les positions approximatives (C16). On effectue une analyse électronique de chaque image secondaire (F'16) et on détermine avec une précision (p) la position précise du point discret (C'16) correspondant.

L'invention est d'une application avantageuse dans le domaine du contrôle optique de produits industriels et de la lecture automatique de plans.

F'16
C16
0
16
C'16
40
30M
50M
29M
5
3
F
16

EP 0 209 422 A1

L'invention se rapporte aux procédés de digitalisation automatique employés en imagerie en vue d'un traitement informatique ultérieur de l'image vidéo d'une scène.

Les dispositifs d'imagerie sont actuellement employés dans de nombreux domaines où l'on souhaite automatiser une tâche où intervient le sens de la vue, pour permettre à un calculateur d'effectuer des analyses, traitements et prises de décisions relatifs à une scène, qui habituellement sont réalisés manuellement par des opérateurs.

Les applications des dispositifs d'imagerie concernent des secteurs-clefs de la productique tels que la surveillance intelligente de la production et notamment la mesure physique, la reconnaissance de formes et de pièces, le contrôle d'aspect, le contrôle de fabrication, la robotique, la conception et la fabrication assistée par ordinateur, la lecture de plans. L'invention s'applique aux mêmes domaines.

Les systèmes d'analyse d'images usuels comportent essentiellement :

- d'une part, une station d'imagerie complétée par une caméra et destinée à acquérir une image digitalisée de la scène,
- d'autre part, un processeur analysant et traitant cette image digitalisée,
- et enfin, des périphériques spécifiques destinés à rendre exploitables dans chaque application particulière les informations concernant la scène qui lui sont délivrées après avoir été analysées par le processeur.

Dans la majorité des systèmes de traitement d'images et de reconnaissance de formes nécessitant une certaine précision, on utilise industriellement des caméras (CCD) utilisant des rétines à transfert de charges.

On distingue ainsi principalement deux types de caméras :

Les caméras à balayage linéaire comportant une rangée d'éléments sensibles orientée selon une première direction. Cette rangée comporte généralement de 1024 à 2048 éléments photosensibles, de forme rectangulaire et d'environ 10 microns de côté.

Selon cette variante, la station d'imagerie nécessite l'adjonction d'un système mécanique, tel un tapis roulant ou une table mécanique, de déplacement de la scène selon une seconde direction de translation, perpendiculairement à la première. Le défilement relatif à la scène vis-à-vis du capteur photosensible permet de reconstituer une image tout en procédant à une analyse ligne par ligne de la scène sous la forme de rangées, parallèles à l'axe primaire, de pavés rectangulaires constituant une trame. La simplicité de fabrication de ce type de capteurs, permet de positionner avec une grande précision les éléments photosensibles les uns par rapport aux autres. De ce fait, ce type de station d'imagerie à caméra linéaire est utilisé plus spécialement pour réaliser des systèmes de télécopie, de contrôle dimensionnel ou de contrôle de qualité.

Les caméras à balayage matriciel comportent un dispositif matriciel constitué d'un réseau rectangulaire d'éléments photosensibles disposés en lignes et en colonnes.

Cette autre variante permet d'effectuer une saisie d'une zone d'images de la scène sans nécessiter le déplacement relatif à cette dernière vis-à-vis de la caméra. Le déplacement est uniquement effectué pour passer d'une zone à une autre.

Chaque station d'imagerie comporte en outre un module électronique comportant :

- un contrôleur de prise de vue,
- un générateur de synchronisation de fonctionnement et de transfert des données binaires,
- un dispositif numériseur assurant la conversion analogique binaire des signaux captés sous forme analogique par la caméra, sur son réseau d'éléments sensibles,
- éventuellement, une mémoire de stockage provisoire des données binaires,
- et enfin, un module de communication permettant le transfert des informations saisies vers l'interface de liaison du calculateur.

Le traitement des images est assuré soit au sein de la station d'imagerie par des circuits électroniques spécialisés adaptés, soit par un calculateur central.

Il arrive souvent, que les parties de la scène présentant une importance dans le processus de traitement d'imagerie à mettre en oeuvre et, de ce fait, nécessitant une digitalisation, soient situées en des zones sensibles isolées, substantiellement écartées les unes des autes et centrées sur des points discrets de la scène répartis de façon aléatoire. Cette situation se retrouve fréquemment, notamment :

- dans les problèmes de contrôle de qualité, de recherche de défauts, de robotique, de programmation automatique,
- et plus particulièrement, ainsi que cela sera développé plus loin, dans les dispositifs de traitement des substrats et des clichés au cours de la fabrication des circuits imprimés.

À l'heure actuelle, lorsque l'on souhaite déterminer avec une précision (p), la position de points discrets situés dans des zones sensibles isolées d'une scène, on est contraint de procéder à la digitalisation globale de la scène avec la précision (p).

Ce type de digitalisation pose les problèmes suivants :

- D'une part, la densité des réseaux CCD classique est trop faible pour assurer un balayage suffisamment large de la scène avec une forte précision (p). Ceci nécessite donc des déplacements nombreux des caméras vis-à-vis de la scène et entraîne un temps de saisie de l'image trop long pour être utilisable industriellement, notamment au sein de robots et systèmes d'inspection globale.
- D'autre part, la taille mémoire des systèmes informatiques à mettre en oeuvre doit être très importante pour stocker la structure de bits correspondant à l'ensemble des pixels recouvrant la scène (chaque bit indiquant si l'élément d'image est blanc ou noir), en raison du nombre important des pixels devant digitaliser la scène (pavés dont le côté doit être égal ou inférieur à la précision souhaitée).

Enfin, les dispositifs informatiques de traitement doivent être très puissants et coûteux pour parvenir à analyser les masses considérables d'informations saisies avec la précision (p).

La présente invention a pour but de remédier globalement à ces inconvénients.

L'invention telle qu'elle est caractérisée dans ses revendications, résout le problème d'acquisition vidéo d'une scène en vue de l'analyse fine et du traitement d'image, avec une précision (p), de seulement certaines zones sensibles, disposées de manière aléatoire autour de points discrets de la scène et selon laquelle la distinction entre les zones sensibles et le reste de la scène ne nécessite qu'une acquisition vidéo et une digitalisation avec une résolution (q) supérieure à (p).

L'objet de l'invention est :

- d'une part d'accroître la vitesse d'acquisition de l'image,
- d'autre part, d'accroître la vitesse de transfert des informations de la station d'imagerie vers le calculateur,
- et enfin d'accroître la vitesse de traitement et de simplifier les dispositifs à mettre en oeuvre.

A cet effet, le procédé optique et électronique proposé par l'invention consiste essentiellement a effectuer un traitement de l'image de la scène, en deux étapes sucessives :

- l'une de prédigitalisation, avec une précision ($q > p$),
- et l'autre de digitalisation, avec une précision ($p$).

On entend par précision, l'erreur commise dans la détermination.

Ainsi, selon cette convention, plus l'expression de la précision est faible, meilleur est le résultat.

Selon l'invention :

- au cours de la première phase, dite de prédigitalisation, on effectue méthodiquement une saisie, une digitalisation et un traitement global de toute l'image primaire de la scène mais avec une précision ($q > p$),
- ensuite, au cours de la seconde phase, dite de digitalisation, on utilise les résultats mis à jour au cours de la première phase de prédigitalisation pour assurer avec une précision ($p < q$), une saisie, une digitalisation et un traitement seulement de certaines fenêtres d'image, en nombre limité, disposées de manière aléatoire et englobant les zones sensibles.

Le procédé général de l'invention repose sur la remarque suivante :

Supposons que nous ayons à déterminer de manière automatique, avec une précision de 1/100ème de millimètre la position d'un millier de points discrets distinguables au centre de zones sensibles, aléatoirement réparties sur une surface de dimension 500 mm x 600 mm.

Selon une méthode usuelle de traitement d'image, on procédera à la digitalisation à 1/100ème de millimètre de l'ensemble de la scène avant de traiter informatiquement tout le fichier images obtenu. On aboutit alors à un fichier images à traiter, d'un volume de $500 \times 100 \times 600 \times 100 = 30.10^{8}$ bits. En outre, supposons que la digitalisation soit effectuée avec une caméra usuelle matricielle CCD, à réseau

rectangulaire de (300 x 500) éléments de dimensions transversales 10 microns. Si l'objectif équipant la caméra donne un grossissement assurant 1/100ème de mm de précision, la caméra matricielle digitalisera un champ de 3 mm x 5 mm.

La digitalisation, selon un processus classique, nécessite donc un minimum de 100 x 200 = 20.000 déplacements de la caméra vis-à-vis de la scène.

Supposons en outre, que pour être distinguables, les zones sensibles et leurs points discrets ne nécessitent qu'une précision de digitalisation de : q = 1/10ème de mm.

Selon le procédé de l'invention on procédera de la manière suivante :

Tout d'abord au cours d'une phase primaire on réalise une prédigitalisation de l'ensemble de la surface de la scène avec une précision de q = 1/10ème de mm. Cela occasione la manipulation globale d'un fichier primaire d'images de : 500 x 10 x 600 x 10 = $30.10^6$ bits, soit 30 millions de bits. De plus, une caméra matricielle CCD possédant un réseau de 300 x 500 éléments, réglée avec un grossissement g1 assurant une précision de 1/10ème de mm voit un champ de 30 mm x 50 mm. En conséquence, la prédigitalisation de la surface envisagée nécessite environ : 10 x 20 = 200 déplacements de la caméra vis-à-vis de la scène.

Au cours de la phase primaire de prédigitalisation on effectue sur les 30 Méga bits de l'image primaire un traitement électronique et on détermine par analyse électronique des images digitalisées avec une précision : q = 1/10ème de mm, la position approximative des 1000 points discrets.

Puis, au cours de la phase secondaire de digitalisation, on effectue le déplacement du système optique successivement à la verticale des positions approximatives des 1000 points discrets et on procède à la digitalisation avec une précision de 1/100ème de mm des 1000 fenêtres entourant les points discrets. On détermine sur chacune des images secondaires, digitalisées avec une précision de 1/100ème de millimètre, les positions précises à 1/100ème de millimètre près des centres des points discrets correpondants.

Si l'on compare les performances des deux solutions on constate que :

- La digitalisation usuelle nécessite environ 20.000 déplacements élémentaires de la caméra matricielle. La digitalisation selon l'invention en nécessite au total 3000 (soit 2000 au cours de la prédigitalisation et 1000 au cours de la digitalisation).
- Le traitement image nécessite, selon un procédé usuel, la manipulation minimale d'environ 3 milliards de bits. Le traitement d'image selon le procédé de l'invention nécessite la manipulation de (30 millions de bits - prédigitalisation) + (1000 x 300 x 500 = 150 millions de bits - digitalisation), soit, au cours de la digitalisation un total de 180 millions de bits traités.

Il apparaît que le procédé de l'invention mis en oeuvre sur cet exemple :

- divise par 16 le volume d'informations traitées et donc sensiblement par 16 le temps de traitement nécessaire à la détermination automatique des points discrets,
- et divise environ par 7 le nombre des déplacements élémentaires à effectuer au cours de la digitalisation et donc sensiblement par 7 le temps de déplacement.

De manière générale on comprend, à la lumière de l'exemple ci-dessus, que le processus de digitalisation de l'invention est applicable chaque fois que l'on souhaite traiter optiquement et électroniquement une scène comportant une pluralité de points discrets placés à l'intérieur de zones sensibles réparties aléatoirement sur la scène. Il concerne plus particulièrement le cas où l'on souhaite déterminer avec une haute précision (p), la position exacte de chacun des points discrets mais où une acquisition et une digitalisation de l'image de chaque zone sensible avec une précision (q) très supérieure à (p) suffit pour distinguer lesdites zones sensibles et leurs points discrets du reste de la scène.

Dans sa mise en oeuvre la plus générale, le procédé de l'invention consiste tout d'abord, au cours d'une phase de prédigitalisation, à saisir avec une précision (q > p), une image générale primaire globale recouvrant toute la scène ; puis à effectuer un traitement automatique électronique primaire de l'image primaire aboutissant à la détermination, avec une précision voisine de (q), de la position approximative des points discrets de la scène.

L'invention est remarquable par le fait qu'au cours d'une phase ultérieure de digitalisation l'on saisit successivement, avec une précision ($p < q$) une image digitalisée secondaire d'une pluralité de positions de la scène, centrée sur la position approximative, préalablement déterminée de chaque point discret. Les dimensions de chaque image secondaire sont choisies de telle manière qu'elles recouvrent la zone sensible correspondante.

Par ailleurs, on effectue successivement une analyse électronique de chaque image secondaire digitalisée et on détermine avec la précision ($p$) la position de chaque point discret situé à l'intérieur.

L'exemple développé ci-dessus met à jour les principaux avantages offerts par l'invention, à savoir :

- une plus grande rapidité d'acquisition, par la limitation de la taille numérique et du nombre des images à saisir,
- un plus grande facilité de mise en oeuvre et rapidité d'exécution, par la limitation du nombre des déplacement à effectuer vis-à-vis du dispositif optique,
- une plus grande précision et fiabilité, par la diminution du nombre des déplacements conjuguées avec l'accroîssement de leur distance, entraînant un affaiblissement des accélérations et donc des vibrations et des imprécisions,
- une diminution très importante du temps de traitement électronique des images et donc une meilleure application industrielle,
- enfin, une réduction de la complexité des systèmes électroniques et de la taille mémoire centrale et périphérique nécessaire au traitement électronique des images.

Les principales caractéristiques, variantes et avantages de l'invention se dégagent de la description qui va suivre en regard des dessins annexés, et des comparaisons qui l'accompagnent effectuées avec l'art antérieur ; lesquels descriptions, comparaisons, et dessins ne sont donnés qu'à titre d'exemples non limitatifs d'utilisation de l'invention et pour une application particulière se rapportant à la programmation automatique de perçage des circuits imprimés.

Sur ces dessins :

- la figure 1 est une vue en perspective schématique d'un système de programmation automatique de perçage de circuits imprimés ;

- les figures 2 et 3 sont des vues schématiques décrivant successivement les première et seconde phases de mise en oeuvre d'une première variante d'application du procédé de l'invention, à la programmation automatique de perçage de circuits imprimés, ladite première variante utilisant une caméra à capteur linéaire ;
- les figures 4 et 5 sont des vues schématiques décrivant successivement les première et seconde phases de mise en oeuvre d'une seconde variante d'application du procédé de l'invention, ladite seconde variante utilisant une caméra à capteur matriciel.

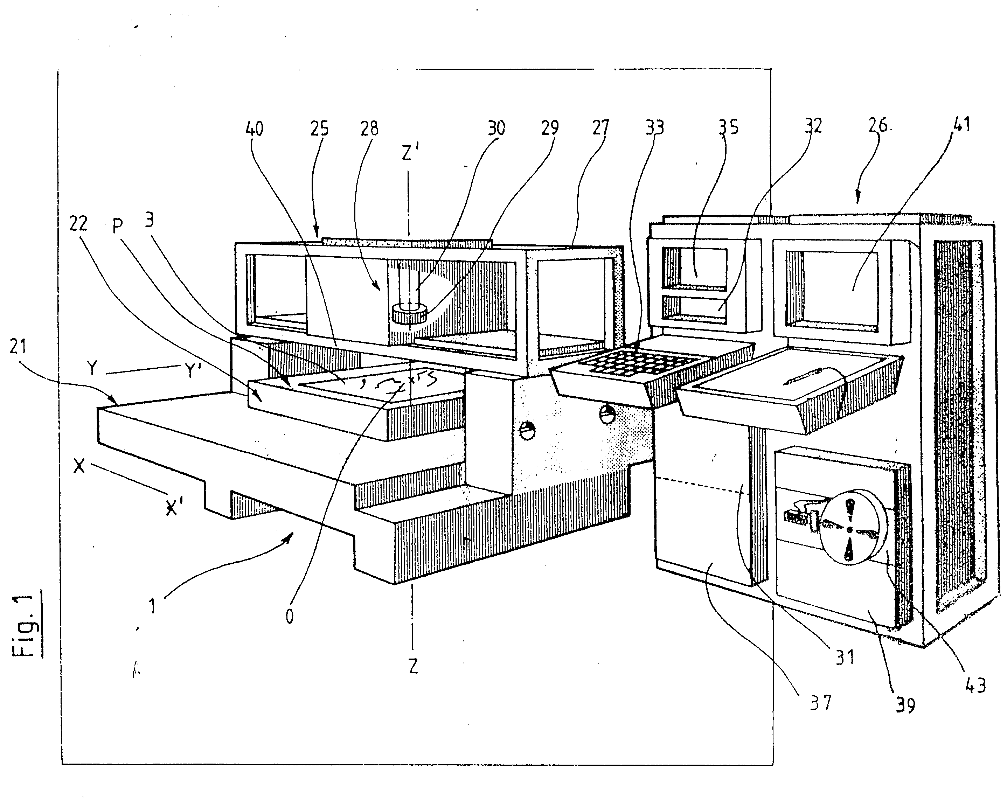

Le dispositif (1) de programmation automatique représenté sur la figure 1 est destiné à effectuer, à partir de clichés (3) de circuits imprimés, la programmation automatique de perçage des circuits imprimés sur machine à commande mécanique. Les clichés (3) sont constitués généralement par une feuille de matière plastique transparente (5) constituée par un matériau sensible, sur lequel ont été matérialisés, par un procédé photographique d'insolation, le tracé des filaments (7) et des pastilles (11..). Les formes caractéristiques (7, 11) du cliché (3) apparaissent de couleur noire.

Le cliché (3) a deux fonctions :
- d'une part, il permet par insolation et technique sérigraphique d'effectuer la gravure électrochimique en série de circuits imprimés,
- et d'autre part, il sert de base métrologique pour effectuer la programmation des perçages qui doivent être réalisés au milieu des pastilles.

Le but du dispositif (1) est d'effectuer une programmation entièrement automatique du perçage de circuits imprimés conformément aux informations métrologiques du cliché (3).

A cet effet, le dispositif de programmation (1) comporte un mécanisme (21), de guidage bidirectionnel d'une table lumineuse (22) selon deux directions (X X') et (Y Y'), parallèlement à son banc (23).

Le mécanisme (21) et notamment son banc (23) sont réalisés principalement en granit et possèdent des moyens mécaniques de déplacements très précis selon les directions (X X') et (Y Y'). Les principes originaux de réalisation du mécanisme (21) sont décrits dans diverses autres demandes de brevets français au nom des demandeurs.

Le banc (23) est surmonté par une enceinte technique (25) maintenue vis-à-vis du banc (23) par un chassis métallique (27) . A l'intérieur de l'enceinte (25) est fixé, verticalement, selon l'axe (Z Z'), un dispositif optique (28) constitué principalement par une caméra (30) et son objectif de mise au point (29).

A droite du mécanisme (21) se trouve l'unité électronique (26) de contrôle et d'édition de programme du dispositif (1). Cette unité (26) de contrôle comporte principalement :

- un calculateur (31) assurant le séquencement automatique de fonctionnement du dispositif (1),
- une unité de mémoire périphérique et notamment une unité de disquettes (32),
- un clavier (33) et un écran de contrôle (35) assurant le dialogue avec l'opérateur,
- une station d'imagerie (37) reliée à la caméra (30), et assurant le traitement électronique automatique des images,
- un dispositif (39) de commande de puissance, assurant sous le contrôle du calculateur (31), la commande des moteurs des moyens de déplacements pour amener la table lumineuse (22) dans une position (X, Y) prédéterminée vis-à-vis de la caméra (30),
- un écran couleur (41) d'affichage des résultats obtenus,
- et enfin, un perforateur (43) éditant des bandes perforées de programmes de perçage devant activer une perceuse à commande numérique.

La table lumineuse (22) est surmontée par une platine transparente (40) sur laquelle est posée le cliché (3). Lequel cliché (3) est éclairé par transparence et peut être distinctement analysé, par la caméra (30) mise au point sur le point (0), d'intersection de l'axe (Z Z') de la caméra (30) avec le plan supérieur (P) de la platine (40).

Le principe général de fonctionnement du dispositif (1) consiste :

- à poser le cliché (3) de circuit imprimé sur la platine (40) de la table lumineuse (22),
- à inspecter le cliché (3) grâce au dispositif optique (28) et notamment à la caméra (30),

- à déplacer pour ce faire, selon une séquence adéquate, la table lumineuse (22) selon (X X') et (Y Y') vis-à-vis de la caméra (30),
- à transmettre les images saisies par la caméra (30) à la station d'imagerie (37).

La station d'imagerie (37) effectue le traitement électronique de ces images et notamment leur digitalisation et leur analyse selon un algorithme spécifique. Elle détermine par traitement des images, automatiquement, et selon une séquence de processus qui sera détaillée plus loin, les centres précis (C'1) des diverses pastilles (11, 12...) du cliché (3). L'ensemble des coordonnées de perçage, organisées selon un format spécifique, adapté à la perceuse à commande numérique utilisée, sont éditées sous forme de bandes perforées, grâce au perforateur (43).

Divers systèmes et processus d'analyse automatique d'image par caméra sont connus à ce jour. Mais dans tous les systèmes connus entièrement automatiques, il est nécessaire d'effectuer une digitalisation de l'ensemble de la scène avec une précision (p) pour déterminer avec une précision (q). les coordonnées de certains éléments géométriques particuliers de la scène. En particulier, la programmation automatique de perçage des circuits imprimés est un des domaines dans lequel l'art antérieur a cherché à appliquer l'ensemble des méthodes connues d'analyse automatique d'images de clichés par camméra et ordinateur pour déterminer automatiquement le centre des pastilles (11, 12...) des clichés (3) de référence. Un des problèmes principaux posés par ce type d'application, est bien entendu de différencier automatiquement les pastilles (11) (noires) des filaments (7) (également noirs) et de déterminer avec une précision (p) d'environ 1/100ème le centre précis (C'1) des pastilles (11).

Ainsi, le brevet US N°3.716.716 (Marantette et al.) décrit un dispositif classique de programmation semi-automatique de perçage muni d'un "oeil centreur". Il est nécessaire avec cet appareil, de disposer d'un cliché de référence et d'une copie de celui-ci. Le cliché de référence est placé sur une table à déplacement mécanique (X Y). La copie est placée sur une table graphique à digitaliser, munie d'un stylet dont le déplacement par un opérateur vis-à-vis de la table graphique provoque conjointement le déplacement de la table (X Y).

L'opérateur désigne manuellement la position approximative de pastilles. Concomitamment la table (X Y) est déplacée. "L'oeil centreur" détermine automatiquement une position plus précise du centre des pastilles. On constate que ce dispositif d'aide à la programmation est semi-automatique. L'opérateur doit en effet, désigner tout d'abord les pastilles manuellement. C'est à partir des informations de position fournies par l'opérateur que la station d'imagerie détermine avec précision (p) le centre des pastilles.

Selon un principe contraire, le brevet US 4.295.198 (R.K. COPELAND et R.J. DIMAGGIS), décrit un dispositif de programmation semi-automatique de perçage de circuits imprimés selon lequel :

- une caméra inspecte avec une précision (p) l'intégralité d'un cliché de circuits imprimés,
- selon des algorithmes spécifiques de traitement de forme, le dispositif détermine avec la précision (p), certaines figures susceptibles d'être des pastilles,
- les pastilles trouvées sont affichées sur un écran pour qu'un opérateur les valide manuellement et apporte des informations suplémentaires liées à ces pastilles (numéro d'outil...).

On constate donc que ce dispositif nécessite l'inspection de tout le cliché avec une précision (p) pour déterminer avec une précision (p) la position des centres des pastilles.

Les solutions proposées par l'art antérieur dans le domaine de la programmation automatique de perçage sont représentatives des lacunes et limites actuelles d'application des méthodes usuelles d'analyse d'image à la recherche de formes dans le domaine industriel, dès l'instant où l'on désire aboutir à une précision (p) assez grande, de l'ordre du centième de millimètre, comme c'est le cas dans le domaine des circuits imprimés.

Soit le système mis en oeuvre inspecte l'intégralité de la scène à traiter avec la précision (p) requise et l'on aboutit, ainsi que cela a été développé plus haut, à un nombre prohibitif de déplacements et un temps de traitement des images extrêmement long fréquemment supérieur à plusieurs heures. Ceci rend très onéreuse et pratiquement inutilisable la méthode, même avec l'aide des plus puissants calculateurs.

Soit on procède à un apprentissage manuel, et le système n'est plus automatique, ce qui limite considérablement son intérêt.

Les systèmes usuels de traitement automatique d'images d'une scène procèdent en une seule étape de digitalisation.

Le procédé de digitalisation et de traitement d'image proposé par l'invention, répond à l'ensemble de ces contraintes et problèmes de :

- digitalisation et traitement entièrement automatiques,
- très grande rapidité et efficacité de fonctionnement dans la recherche des points discrets.

Selon son application générale, le procédé optique et électronique de l'invention s'applique dans le cas de traitement d'image, en vue d'effectuer notamment une métrologie ou un contrôle. Il concerne tous les cas où on doit effectuer avec une précision (p), la détermination de points dicrets situés à l'intérieur de zones sensibles réparties de manière aléatoire sur une scène. Le procédé de l'invention peut être appliqué dès l'instant où l'on peut faire une distinction numérique des zones sensibles et de leurs point discrets sur l'image digitalisée de la scène avec une précision (q > p).

Dans le cas général, le procédé de l'invention consiste tout d'abord à saisir et à digitaliser une image générale primaire de la scène avec la précision (q) suffisante pour distinguer les zones sensibles du reste de la scène. Cette digitalisation s'effectue de manière connue :

- grâce à un dispositif optique et notamment une caméra (30) mise au point sur la scène, captant une image analogique de la scène,
- et une station d'imagerie (37) reliée au dispositif optique (30) et assurant la transformation de l'image de la scène en données digitales.

On effectue ensuite, grâce à la station d'imagerie (37) un traitement électronique de l'image primaire de la scène, digitalisée avec une précision (q) et une détermination des positions approximatives de tous les points discrets. On peut utiliser pour ce faire, de nombreux algorithmes de traitement d'image et notamment ceux décrits dans le brevet US 4.295.198 ou préférentiellement ceux décrits par les demandeurs dans diverses demandes de brevets français relatives à la détermination automatique de centre de pastilles et de traitement d'images. Les algorithmes ne sont pas l'objet de la présente demande.

Mais le procédé de l'invention est remarquable par le fait qu'après cette première phase de prédigitalisation et au cours d'une seconde phase de digitalisation, l'on saisit et l'on digitalise successivement, avec une précision (p < q), une image secondaire d'une pluralité de fenêtres partielles de la scène, centrée sur la position approximative, préalablement déterminée de chaque point discret et couvrant la zone sensible correspondante.

Enfin, on effectue successivement, à l'aide d'une station d'imagerie (37) une analyse fine de chaque image secondaire digitalisée avec la précision (p) et l'on détermine automatiquement avec la précision (p < q) la position de chacun des points discrets situés à l'intérieur de la zone discrète analysée.

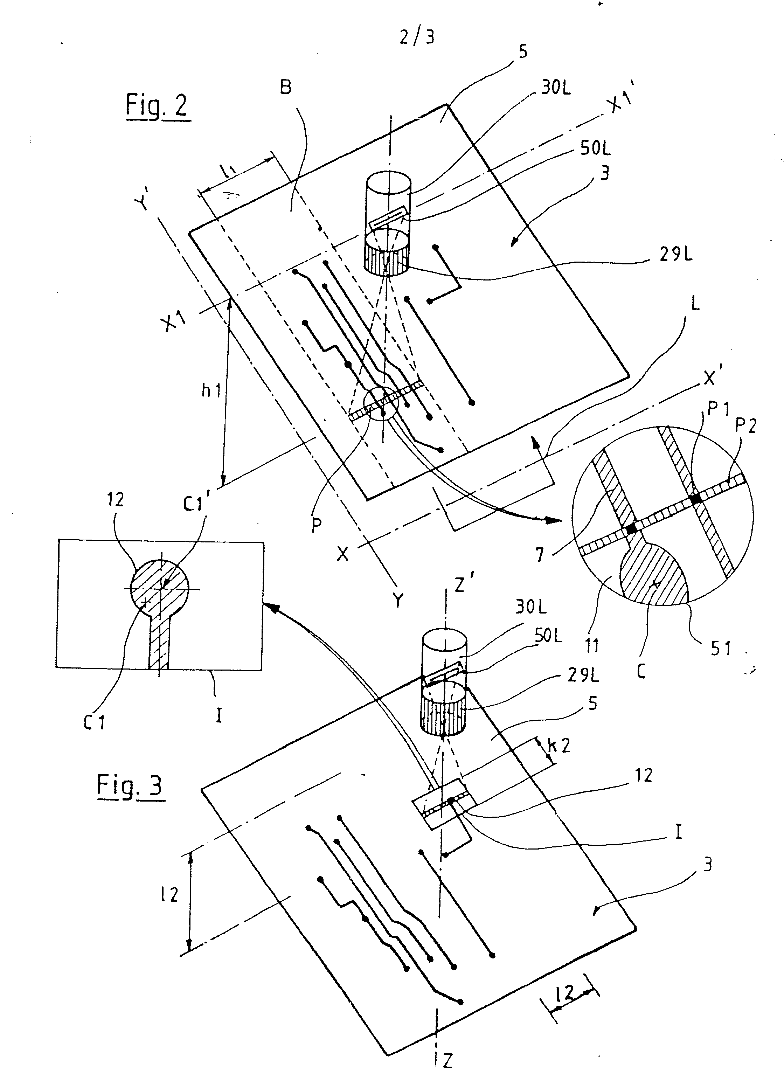

Les figures 2 et 3 représentent une première variante d'application du procédé de l'invention à la digitalisation et à la programmation automatique de perçage de circuits imprimés, à partir de clichés (3), sur un dispositif (1).

Selon cette variante, le cliché (3) est placé sur la platine (40) de la table lumineuse (22) du mécanisme de guidage (21), en regard et à distance constante (h1) d'une caméra linéaire (30 L), munie d'un capteur linéaire (50 L) à éléments sensibles de type CCD (à transfert de charges).

La caméra (30 L) est fixée à l'intérieur de l'enceinte technique (25) et placée verticalement selon (axe Z Z') pour viser le point fixe (O) situé dans le plan (P) de la platine (40).

Le réseau linéaire (50 L) est orienté selon la direction fixe (X, X'1) perpendiculairement à la direction secondaire (Y, Y') et doté d'un objectif (29 L).

Au cours de la première phase de prédigitalisation, l'objectif (29 L) est réglé au grossissement (g1) et mis au point sur le plan (P) de la platine (40).

Le grossissement initial (g1) est choisi en fonction de la taille des éléments sensibles du capteur (50 L) de manière à ce que chaque pavé (p1, p2) vu par un élément sensible du capteur (50 L) ait une dimension transversale sensiblement égale à (q > p).

Le mécanisme de guidage (21), assure sous la commande du dispositif de puissance (39) piloté par le calculateur (31), provoquant le déplacement de la table à lumière (22) selon les directions (X X') et (Y Y') face à la caméra linéaire (30 L).

Les déplacements du cliché (3) vis-à-vis de la caméra linéaire (30 L) sont croisés, en lacets (L) et successivement orientés dans les directions primaire (X X') et secondaire (Y Y'). Au cours de chaque déplacement de la table à lumière (22) selon la direction secondaire (Y Y'), la caméra linéaire (30 L) saisit une succession de bandes primaires parallèles (B), réparties sur toute la longueur du cliché (3).

Celles-ci ont une largeur (l1) et sont orientées selon la direction secondaire (Y Y').

Après la saisie de chaque bande (B), la table lumineuse (40) est déplacée vers la gauche, selon la direction primaire (X X') d'une distance inférieure à (l1). En sorte que la succession des bandes primaires (B) constitue un recouvrement du cliché (3).

Les images successivement saisies par la caméra linéaire (30 L) sont transmises sous forme analogique à la station d'imagerie (37) qui les combine entre elles et les transforme sous forme d'images digitales (51) constituées de pavés (p1) associés à un niveau noir et (p2) associés à un niveau blanc.

En outre la station d'imagerie (37) assure, par traitement électronique, l'analyse automatique des images digitalisées (51) reconstituées avec la précision (p) et détermine automatiquement avec la précision (p) les centres approximatifs (C) de toutes les pastilles (11) en différenciant leurs formes de celles des filaments (7). grâce notamment à des informations de tailles préalablement rentrées par l'opérateur à l'aide du clavier (33). L'algorithme de recherche de centre utilisé doit posséder des caractéristiques très puissantes, pour être suffisament rapide, n'oublier aucune pastille et ne générer aucun faux centre.

A l'issue de la phase de prédigitalisation, l'ensemble des coordonnées des centres approximatifs (C) des pastilles (11) du cliché (3) ont été déterminées avec la précision (q). Ces coordonnées sont transférées par le calculateur (31) à l'intérieur de l'unité de disquettes (32) pour y être mémorisées.

On procède ensuite à la phase de digitalisation décrite figure 3.

Pour ce faire,

- soit on utilise une deuxième caméra munie d'un objectif de grossissement (g2 > g1) aboutissant à la résolution (p),

- soit préférentiellement, ainsi que cela est décrit figures 2 et 3, on utilise une seule caméra (30 L) munie d'un objectif (29 L) de type zoom, c'est-à-dire à focal et grossissement sensible, et dans ce cas, on change le grossissement pour l'amener à (f2) et on règle la mise au point sur la platine (40).
- soit enfin on rapproche la caméra (30 L) de la platine (40) pour augmenter le grossissement de (g1) en (g2) et on modifie également à une distance (h2) la mise au point.

Dans tous les cas, on opère, au cours de la seconde phase de digitalisation, avec une caméra notamment de type linéaire (30 L) (dans la première variante recommandée), réglée avec le grossissement (g2). Cette caméra (30 L) est mise au point sur la platine. A un élément sensible de son capteur (50 L) est associé un pavé image de dimension (p). C'est-à-dire que la résolution est égale à $(p < q)$.

Selon cette première variante de seconde phase de digitalisation, le calculateur (31) recherche successivement en mémoire les centres approximatifs $(C_1)$ mémorisés. Puis il active par l'intermédiaire du dispositif de commande (39) les moteurs du mécanisme de guidage (21) de façon à déplacer le cliché (3) selon (X) et (Y) et amener successivement chaque centre approximatif $(C_1)$ à la quasi verticale (0) ou l'axe (Z Z') de la caméra linéaire (30 L). Le déplacement entre les centres approximatifs $(C_1)$ s'effectue à grande vitesse du fait que la caméra (30 L) est inactive.

Puis, à la quasi verticale du centre approximatif $(C_1)$ courant, le calculateur (31) commande le déplacement du cliché (3) selon la direction secondaire (Y Y') ou une petite course (k2).

En sorte que la caméra linéaire (30 L) saisit et transmet à la station d'imagerie (37) une image secondaire partielle (I) constituée d'une bande secondaire de largeur (12) de faible dimension recouvrant la pastille courante (12).

La station d'imagerie (37) digitalise chaque image secondaire (I) avec une précision (p) et effectue sur l'image digitalisée, un traitement d'image aboutissant à la détermination avec la précision (p) voulue du centre $(C_1)$ précis de la pastille courante (12).

Une seconde variante du procédé de l'invention est décrite figures (4) et (5).

Elle est sensiblement équivalente à la première mais consiste à utiliser une caméra matricielle (30 M) à la place de la caméra linéaire (30 L).

La caméra matricielle (30 M) est notamment du type CCD (à transfert de charge) à réseau d'élément sensible rectangulaire (50 M). Elle est munie d'un objectif (29 M).

Au cours de la phase primaire de digitalisation décrite figure (4), l'objectif est réglé au grossissement (g1) et mis au point sur la platine (40) de facon à assurer une précision (q). Le champ rectangulaire ($A_1$, $A_2$, $A_3$, $A_4$) vu par la caméra matricielle (30 L) est d'assez grande dimension. Il permet de voir plusieurs pastilles (13, 14, 15, 16) simultanément.

On saisit simultanément à l'aide de la caméra (50 M) une série de fenêtres primaires (F), du cliché (3). Pour ce faire, on déplace méthodiquement entre chaque saisie la table lumineuse (22) face à la caméra (30 M) selon les directions (X) et (Y).

On déplace le cliché (3) successivement aux noeuds d'un réseau primaire rectangulaire de points (N1, N2...) espacés dans les deux directions (X X') et (Y Y') d'une distance inférieure aux dimensions ($A_1$, $A_2$) et ($A_1$, $A_4$) du champ primaire de la caméra (30 M).

Les fenêtres primaires (F1, F2...) successivement saisies par la caméra (30 M) ont des bords qui se chevauchent en sorte que la réunion des diverses fenêtres primaires (F) constitue un recouvrement du cliché (3).

Chaque image primaire (F) est transmise par la caméra matricielle (30 M) en direction de la station d'imagerie (37) puis elle est digitalisée.

En outre, la station d'imagerie effectue sur chaque image digitalisée primaire (I), un traitement électronique aboutissant :

- à la reconnaissance automatique de toutes les pastilles (13, 14, 15, 16) vis-à-vis des filaments (8, 9, 10...),
- et à la détermination automatique des positions (C13, C14, C15, C16), avec une précision (q), des centres approximatifs des pastilles (13, 14, 15, 16) situées dans les fenêtres (F) successivement traitées.

A l'issue de la phase de prédigitalisation, l'ensemble des coordonnées des centres approximatifs (C13, C14, C15, C16) sont transférées par le calculateur (31) à l'intérieur de l'unité de disquettes (32) pour y être mémorisées.

On procède ensuite à la phase de digitalisation décrite figure (5).

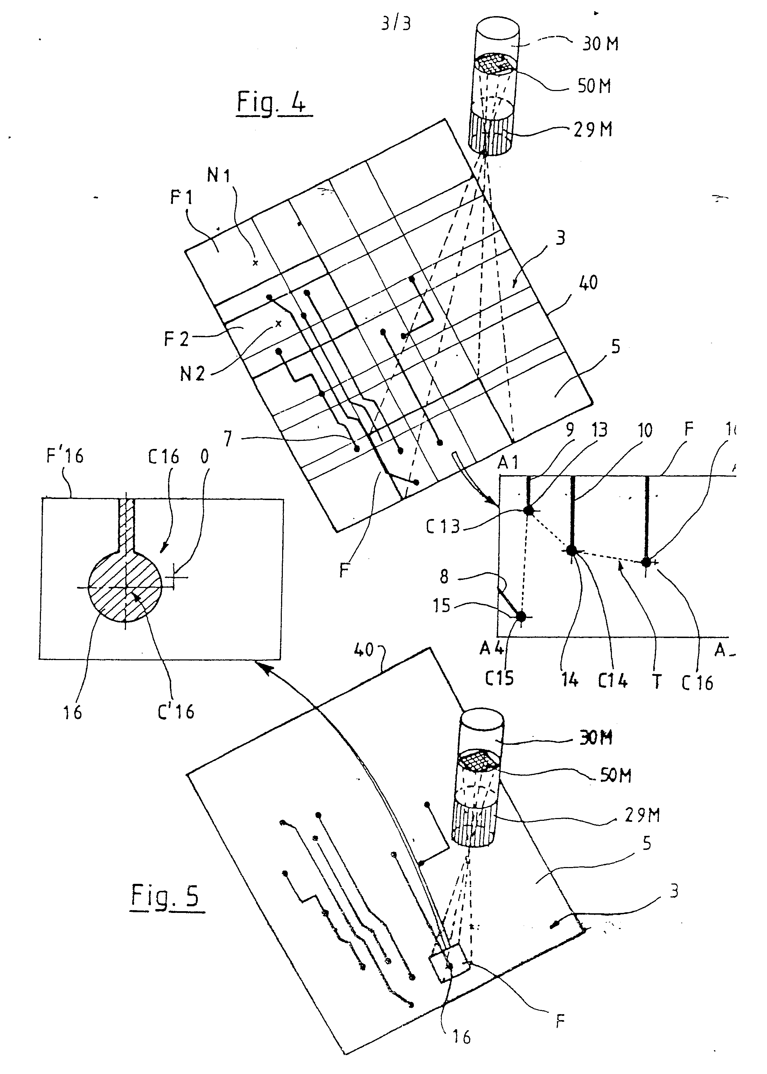

On change alors le grossissement de l'objectif (29 M) de la caméra (30 M) pour l'amener à un niveau (g2) donnant la précision (p). On utilise pour cela l'une des méthodes décrites plus haut. Le grossissement (g2) est en outre préférentiellement choisi (figure 5) en fonction des dimensions des pastilles (16) à traiter, de telle manière que chaque image secondaire (F'16) comporte une et une seule pastille (16).

Puis le calculateur recherche successivement les coordonnées des centres de pastilles (C13, C14, C15, C16) mémorisées. Pour ce faire, le calculateur (31) active les moteurs du mécanisme de guidage (21) grâce au dispositif de commande de puissance (39) et amène successivement chaque centre approximatif (C16) en coïncidence avec le point 0 d'intersection de l'axe (Z Z') de la caméra (30 M) avec le plan (P) de la platine (40).

La caméra (30 M) saisit successivement une fenêtre (F') centrée sur chaque point discret (16).

Chaque image analogique d'une fenêtre (F') est transmise à la station d'imagerie (37) pour être digitalisée avec une précision (p) en une image secondaire (F'16) recouvrant la pastille (16) correspondante. La station d'imagerie (37) effectue enfin un traitement électronique sur chaque image digitalisée (F'16) et détermine avec une précision voisine de (p) le centre précis (C'16) de la pastille (16) contenue à l'intérieur de l'image secondaire (F'16).

Préférentiellement, et entre les phases de prédigitalisation et de digitalisation, on procède, par l'intermédiaire du calculateur (31), à un classement du fichier des points approximatifs (C13, C14, C15, C16...) de manière à les placer dans un ordre tel que le chemin les joignant successivement soit minimal. Une portion de ce chemin optimisé (T) apparaît en pointillés figure (4). Au cours de la phase secondaire de digitalisation on déplace le cliché (3) vis-à-vis de la caméra (30 M) selon la séquence de points approximatifs (15, 13, 14, 16) préalablement optimisée. L'intérêt de cette disposition est de réduire le chemin parcouru au cours de la seconde phase de digitalisation, et donc de diminuer le temps de programmation.

On a décrit ci-dessus deux variantes, l'une d'utilisation d'une caméra lineaire (30 L) et l'autre d'utilisation d'une caméra matri-

cielle (30 M) pour effectuer successivement les deux étapes du procédé de l'invention.

Il est recommandé selon une troisième variante de l'invention de combiner les avantages des caméras linéaire (30 L) et matricielle (30 M).

Le dispositif comporte alors une caméra linéaire (30 L) réglée au grossissement (g1) et une caméra matricielle réglée au grossissement (g2) > (g1). La caméra matricielle (30 L) est utilisée au cours de la phase de prédigitalisation pour effectuer une digitalisation complète du cliché (3) avec la précision (q) (figure 2) et déterminer les centres approximatifs (C'i). Au cours de la phase de digitalisation, la caméra matricielle (30 M) est utilisée (figure 5).

Le déplacement de la platine (40) et le traitement des images (F) et (F') sont de manière avantageuse réalisés de manière combinee.

Ainsi, il est préférable que l'unité électronique de contrôle (26) comporte au moins deux systèmes intelligents à microprocesseur :

- notamment l'un associé au calculateur (31) pour gérer le fonctionnement général du dispositif (1) et commander le déplacement du mécanisme de guidage (21),
- et l'autre exerçant le traitement des images (F et F') au sein de la station d'imagerie (37).

Ainsi, lors de la phase de prédigitalisation (figure 4), les déplacements élémentaires de la platine (40) notamment en direction de la fenêtre primaire (F2) seront assurés par le premier microprocesseur.

Pendant la période de déplacement, le second microprocesseur effectuera le traitement de l'image digitalisée de la fenêtre primaire (F1) préalablement mémorisée.

De même, au cours de la phase de digitalisation, le traitement d'une fenêtre secondaire (F'16) sera assuré parallèlement au déplacement de la platine (40) pour assurer la mise en place de la fenêtre suivante vis-à-vis de la caméra (30 M).

Cette solution permet de diviser sensiblement par deux le temps de traitement d'un cliché (3).

Le procédé d'analyse des images prédigitalisées peut être moins précis que celui des images digitalisées. En effet, on peut choisir un algorithme de recherche des points approximatifs tel qu'il accepte éventuellement des points centres approximatifs ; ceci afin d'être sûr de n'oublier aucun vrai centre approximatif (C13, C14, C15, C16).

Mais au cours de la phase de digitalisation les faux centres seront rejetés comme ne répondant pas à des critères spécifiques de tri.

L'invention telle qu'elle est décrite ci-dessus est d'un emploi particulièrement conseillé dans tous les domaines du traitement d'image industriel et plus spécialement :

- du contrôle de défauts isolés sur des composants tels des circuits imprimés,
- de la recherche de formes,
- de la lecture automatique de plans,
- et de la programmation automatique du perçage de circuits imprimés.

L'invention ayant maintenant été décrite et son intérêt justifié sur un exemple détaillé, les demandeurs s'en réservent l'exclusivité, pendant toute la durée du brevet, sans limitation autre que celle des revendications ci-après.

# REVENDICATIONS

1) Procédé optique et électronique de digitalisation, avec une précision (p), de zones sensibles isolées (16), centrées, sur des points discrets (C'16), d'une scène (3), et répartis de façon aléatoire, en vue de déterminer avec une précision (p) la position précise desdîts points discrets (C'16), le procédé consistant tout d'abord :

- à saisir et à digitaliser une image générale primaire (F) de la scène (3) avec une précision (q) supérieure à (p,) suffisante pour distinguer lesdites zones sensibles (13, 14, 15, 16) du reste de la scène (3),
- à effectuer un traitement de ladite image générale primaire digitalisée (F) de façon à déterminer avec une précision voisine de (q) la position approximative (C16) desdîts points discrets de la scène (3), ledît procédé étant caractérisé en ce que :

- l'on saisit ultérieurement, successivement avec une précision (p < q) une image digitalisée secondaire (F'16) d'une pluralité de portions (F') de la scène(3),
  - . centrée sur la position approximative (C16), préalablement déterminée, de chaque point discret,
  - . et recouvrant la zone sensible (16) correpondante,
- et l'on effectue successivement l'analyse fine requise de chaque image secondaire digitalisée (F'16) en vue de déteminer avec la précision (p) la position de chacun des points discrets situés à l'intérieur.

2) Procédé selon la revendication 1, de saisie générale globale avec une précision (q) de l'image vidéo primaire de la scène (3), par déplacement de la scène (3) selon une direction de translation secondaire (Y Y') en regard et à distance constante d'une caméra linéaire primaire (30 L) munie d'un réseau linéaire (50 L) d'éléments sensibles orientés selon une direction primaire (X1 X'1) perpendiculaire à la direction secondaire (Y Y') de déplacement, et dotée d'un objectif (29 L) de grossissement (g1) mis au point sur le plan (P) de la scène, de façon à saisir une bande longitudinale (B) de la scène (3) de largeur ($l_1$), constituée de pavés (p1, p2) de dimensions générales transversales (q),

ledit procédé étant caracterisé en combinaison en ce que :

- on déplace la scène (3) relativement à la camera primaire (30 L) selon des mouvements en lacets (L) orientés successivement selon les deux directions primaire (X X') et secondaire (Y Y'),
- au cours de chaque déplacement, selon la direction secondaire (Y Y'), on saisit une bande (B) de la scène (3) de largeur (l1) et orientée selon la direction secondaire (Y Y'),
- puis successivement, après chaque bande (B), on déplace la scène, selon la direction primaire (X X') d'une distance inférieure à (l1), de façon à saisir globalement l'image primaire de la scène (3),
- enfin, on effectue sur l'image primaire globale digitalisée de la scène (3), constituée par le recouvrement des bandes (B) orientées suivant ladîte direction secondaire (Y Y'), un traitement électronique de l'image, déterminant avec une précision (q), la position approximative desdîts points discrets (C17, C14, C15, C16).

3) Procédé selon l'une des revendications 1 à 2 précédentes de saisie, avec une précision (p), d'une image digitalisée secondaire (I) de chaque zone sensible (12), en vue de déterminer avec une précision (p), la position des points discrets (C'11) correspondants, ce procédé consiste à opérer un déplacement de la scène (3), selon une direction de translation secondaire, en regard et à distance constante d'une caméra linéaire secondaire (30 L), munie d'un réseau d'éléments sensibles (29 L), orientés selon une direction primaire (X X'1) perpendiculaire à la direction secondaire (Y Y'), et dôtée d'un objectif de grossissement (g2) mis au point sur le plan (P) de la scène (3) de façon à saisir un pinceau longitudinal de la scène, de largeur (l2), constitué de pavés de dimensions générales transversales (p), ledît procédé consistant notamment :

- à acquérir une image vidéo primaire de la scène (3) avec une résolution (q) supérieure à (p),
- et à déterminer, selon le procédé de la revendication 1, la position approximative desdîts points sensibles (C1) avec une précision voisine de (q),

BAD ORIGINAL

ledît procédé étant caractérisé en combinaison, en ce que :

- d'une part l'on déplace ensuite ladite scène relativement à la caméra secondaire dans deux directions :
  - . d'une part, au voisinage de chaque point discret (C1),
  - . et d'autre part, selon une direction de translation longitudinale à la quasi verticale de chaque point discret (C1) de façon à acquérir avec ladîte caméra secondaire (30 L), une portion de bande (I) de la scène (3) constituant une image rectangulaire secondaire entourant et centrée successivement, sur chaque dît point discret (Ci), et recouvrant la zone sensible correspondante (12).
- et d'autre part, on effectue sur chaque image partielle secondaire (I) successivement digitalisée, un traitement électronique de l'image secondaire et on détermine avec précision (p); la position exacte (C'1) du point discret correspondant.

4) Procédé selon l'une des revendications 1 à 2 précédentes, d'acquisition des images vidéo secondaires discrètes d'une scène à l'aide d'une caméra matricielle (30 M) munie d'un réseau (50 M) d'éléments sensibles à deux dimensions, et dotée d'un objectif de grossissement (g2) tel, que la partie de la scène associée à chaque élément sensible ait une dimension générale (p), le procédé consistant notamment :

- à acquérir une image vidéo (F) primaire de la scène (3) avec une résolution (q) supérieure à (p),
- et à déterminer, selon le procédé de la revendication 1, la position approximative (C13, C14, C15, C16) desdîts points discrets avec une précision (q).

Ledît procédé étant caractérisé en ce que l'on déplace ensuite la scène (3) relativement à la caméra matricielle secondaire (30 M), de façon à amener successivement la position approximative de chaque point discret (C13, C14, C15, C16) face à l'axe optique (Z Z') de la caméra matricielle secondaire (30 M),

- on saisit avec la caméra secondaire (30 M) une fenêtre (F') recouvrant la zone sensible correspondante (16),
- on digitalise successivement une image partielle secondaire (F'16) de chaque fenêtre (F'),

- et on effectue successivement sur chaque image secondaire digitalisée (F'16), un traitement électronique, déterminant avec une précision sensiblement égale à (p), la position exacte (C'16) du point discret inscrit dans la zone sensible (16) correspondante.

5) Procédé selon l'une des revendications 1 à 4 précédentes, de digitalisation avec une précision (p) de zone sensible isolée, centrée sur des points discrets (C'16) d'une scène (3), afin de déterminer avec une précision (p) la position desdits points discrets (C'16) ; ce procédé consistant à utiliser une caméra (30 L, 30 M) munie d'un objectif (20 L, 29 M) de mise au point, vis-à-vis de laquelle on déplace la scène (3) en deux étapes :

- une première étape de prédigitalisation au cours de laquelle on digitalise globalement toute la scène avec précision (q),
- une seconde étape de digitalisation au cours de laquelle on digitalise avec une précision (p < q) certaines portions de la scène centrées sur des positions approximatives (C16) préalablement déterminées desdits points discrets (C'16),

Ledît procédé étant caractérisé en ce que :

- l'on utilise une unique caméra (30 M, 30 L) et, entre les deux étapes, on modifie le grossissement de l'objectif (29 M, 29 L), notamment par zoom, d'un grossissement (g1), donnant une précision (q) à un grossissement (g2) donnant une précision (p).

6) Procédé selon l'une des revendications 4 et 5 précédentes de digitalisation avec une précision (p) de zones sensibles isolées (16), centrées sur des points discrets (C'16), en vue de déterminer avec une précision (p) la position desdits points discrets (C'16), ce procédé consistant à utiliser une caméra matricielle (30 M) munie d'un objectif (29 M) de grossissement variable notamment de type zoom,

Ledît procédé étant caractérisé en ce que :

- l'on règle la caméra (30 M) sur le grossissement (g1), assurant la précision (q < p), et on met au point la caméra (30 M) sur la scène (3),
- on déplace la scène (3) successivement aux noeuds (N1, N2...) d'un réseau primaire rectangulaire de points espacés dans deux directions, d'une distance inférieure aux dimensions du champ primaire ($A_1$, $A_2$, $A_3$, $A_4$) de la caméra (30 M) dans cette direction, réglée au grossissement (g1),

- on saisit, grâce à la caméra (30 M), une image primaire (F) entourant chaque noeud et on digitalise cette image primaire partielle selon un réseau de pixels (p1, p2),
- on effectue un traitement électronique automatique de chaque image rectangulaire primaire (F) partielle successivement digitalisée de manière à distinguer les zones sensibles (13, 14, 15, 16) situées à l'intérieur.
- on détermine avec une précision sensiblement égale à (q) la position approximative (C13, C14, C15, C16) de chaque point discret correspondant à une zone sensible (13, 14, 15, 16),
- on mémorise successivement lesdîtes positions approximatives (C13, C14, C15, C16) de chaque point discret de la scène (3),
- puis, on règle le grossissement de la caméra (30 M) à un niveau (g2 > g1) assurant une précision (p), et on met au point la caméra (30 M) sur la scène (3),
- grâce aux coordonnées préalablement enregistrées, on déplace la scène (3) de manière à amener successivement la position approximative (C13, C14, C15, C16) de chaque point discret à la verticale (0) de l'axe (Z Z') de la caméra matricielle (30 M),
- on acquièrt et on digitalise avec une précision (p), une image secondaire (F'16) de chaque fenêtre (F') entourant les positions approximatives (C16) mémorisées,
- on effectue successivement un traitement électronique automatique de chaque image rectangulaire secondaire (F'16), et on détermine avec une précision (p), la position exacte de chaque point discret (C'16) correspondant à une zone sensible (16) située à l'intérieur du champ de la caméra réglée au grossissement (g2).

7) Procédé selon l'une des revendications 1 à 6 précédentes de digitalisation, avec une précision (p) de zones sensibles (13, 14, 15, 16) isolées, situées autour des points discrets d'une scène (3), afin de déterminer avec une précision (p), la position

desdîts points discrets.

Le procédé étant caractérisé en ce que :

- entre la phase de prédigitalisation globale des images primaires (F) de la scène et la phase de digitalisation et d'analyse systématique des images secondaires (F) centrées sur la position approximative (C16) des points discrets, on effectue une optimisation du chemin joignant les positions approximatives (C13, C14, C15, C16),
- et au cours de la phase de digitalisation des images secondaires (F), on déplace la scène (3) vis-à-vis du dispositif optique (28) de digitalisation, selon une séquence de points présentant le chemin le plus court déterminé préalablement.

8) Procédé selon la revendication 4 précédente, de digitalisation secondaire à l'aide d'une caméra matricielle, caractérisé en ce que précédemment à la phase secondaire de digitalisation on règle la caméra matricielle (30 M), en fonction des dimensions des zones sensibles (16), de manière que chaque image secondaire ultérieurement saisie et digitalisée ne contienne qu'une zone sensible (16).

9) Procédé de digitalisation selon l'une des revendications 1 à 8 précédentes, caractérisé en ce que :

- au cours de la phase de prédigitalisation automatique, on choisit un procédé de recherche des zones sensibles tel que l'on isole dans certaines configurations des points sensibles supplémentaires,
- mais au cours de la phase de digitalisation, centre par centre, on rejette les points sensibles supplémentaires.

10) Procédé de digitalisation selon l'une des revendications 1 à 9 précédentes, caractérisé en ce que :

- au cours de la phase de déplacement entre deux zones de contrôle (F2), on effectue le traitement électronique de la zone précédente (F1).

11) Dispositif (1) de digitalisation automatique vidéo, avec une précision (p) et selon le procédé d'une des revendications 1 à 7 précédentes, d'un cliché (3) de fabrication de circuits imprimés, comprenant sur un support notamment transparent :

BAD ORIGINAL

- des pastilles (13, 14, 15, 16) dont le centre (C'16) matérialise la position des points de perçage des circuits,
- et éventuellement, des filaments (7) schématisant les zones de connexion.

Ceci, en vue de générer automatiquement un programme de perçage pour machines à commandes numériques.

. Le dispositif (1) comportant :

- un dispositif optique (28) d'acquisition d'images, mis au point sur la scène (3),
- une platine (40) destinée à supporter les clichés (3),
- des moyens mécaniques (21) de déplacement de la platine (40) dans deux directions (X, Y) en regard du dispositif optique (28),
- un dispositif électronique (39) de commande de puissance des moteurs des moyens mécaniques (21),
- une unité de contrôle (26, 31) assurant le séquencement et la commande de déplacement des moyens mécaniques (21),
- et une station d'imagerie (37) assurant le traitement électronique et l'analyse automatique des images transmises par le dispositif optique.

Ledît dispositif de digitalisation étant caractérisé en ce que :

Il comporte un système optique (28) assurant deux grossissements (g1) et (g2 > g1).

12) Dispositif (1) de digitalisation automatique, selon la revendication 11 précédente, caractérisé en ce que son dispositif optique comporte deux caméras de grossissement (g1) et (g2) différents.

13) Dispositif (1) de digitalisation automatique, selon la revendication 11, caractérisé en ce qu'il comporte, relié au système d'analyse automatique des images :

- une caméra linéaire (30 L) munie d'un objectif (29 L) de grossissement (g1),
- et une caméra matricielle (30 M), munie d'un objectif (29 M) de grossissement (g2 > g1).

14) Dispositif de digitalisation automatique selon la revendication 11, caractérisé en ce que son système de contrôle assure le séquencement des mouvements, de telle manière que :

- au cours d'une première phase de prédigitalisation, le système optique (28) soit réglé au grossissement (g1), et que la scène (3) soit déplacée en sorte que le système électronique d'analyse, isole avec une précision (q), les coordonnées approximatives (C13, C14, C15, C16) de tous les centres de pastilles (13, 14, 15, 16),

- et ensuite, au cours d'une seconde phase de digitalisation, le système optique (28) réglé au grossissement (g2), soit successivement déplacé au voisinage de la position approximative (C16) de chaque centre de pastille, afin que l'image digitalisée (F'16) au grossisement (g2) soit traitée par le système électronique d'analyse, et que celui-ci détermine automatiquement avec une précision (p) le centre réel (C'16) de chaque pastille (16).

15) Dispositif (1) de digitalisation automatique selon la revendication 11 précédente comportant au moins deux microprocesseurs :

- l'un associé à un calculateur (31) gérant le fonctionnement général du dispositif et commandant les déplacements des moyens mécaniques (21),
- et l'autre assurant le traitement des images, ledît dispositif de digitalisation étant caractérisé en ce que :
- au cours des déplacements de la platine entre deux zones de contrôle (F1, F2) sous la commande du premier microprocesseur,
- le second microprocesseur effectue le traitement de l'image de la zone précédente (F1).

Fig. 1

21
22
P
3
X
X'
Y
Y'
1
0
Z
Z'
40
25
28
30
29
27
33
35
32
26
41
43
39
31
37

Fig. 2
B
5
30L
X1'
50L
3
l1
Y'
29L
X1
L
h1
X'
P1
P2
12
C1'
P
7
X
Y
Z'
30L
50L
11
51
C
29L
C1
I
5
k2
Fig. 3
12
I
3
l2
l2
Z

Fig. 4
30 M
50 M
29 M
N 1
F 1
3
40
F 2
N 2
5
7
9
13
10
F
A 1
F'16
C 16
0
C 13
8
15
A 4
C15
14
C14
T
C 16
40
16
C'16
30M
50M
29M
5
Fig. 5
3
F
16

0209422

Office européen des brevets

# RAPPORT DE RECHERCHE EUROPEENNE

Numero de la demande

EP 86 40 1274

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl.4) |
|---|---|---|---|
| A | PROCEEDINGS PATTERN RECOGNITION, 1982, page 1196, IEEE, New York, US; I. NACKUNSTZ: "An automatic system for digitizing line drawings (Video-Scan)" * Page 1196, colonne de gauche, lignes 40-48 * | 1 | G 06 K 11/00<br>G 05 B 19/42<br>H 04 N 1/04 |
| | ----- | | |
| | | | DOMAINES TECHNIQUES RECHERCHES (Int. Cl.4) |
| | | | G 06 K 11/00<br>G 06 F 3/00<br>G 06 F 15/64<br>H 04 N 1/40 |

Le present rapport de recherche a ete etabli pour toutes les revendications

| Lieu de la recherche | Date d achevement de la recherche | Examinateur |
|---|---|---|
| LA HAYE | 18-09-1986 | BURGAUD C. |

CATEGORIE DES DOCUMENTS CITES

X particulièrement pertinent à lui seul
Y particulièrement pertinent en combinaison avec un autre document de la même categorie
A arrière-plan technologique
O divulgation non-ecrite
P document intercalaire

T theorie ou principe à la base de l'invention
E document de brevet anterieur, mais publie à la date de dépôt ou après cette date
D cite dans la demande
L cite pour d'autres raisons

& membre de la même famille, document correspondant

OEB Form 1503 03 82